# EUROPEAN PATENT APPLICATION

(11) **EP 4 513 658 A1**
(43) Date of publication of application: **26.02.2025**
(21) Application number: 24196074.9
(22) Date of filing: 23.08.2024
(51) Int. Cl.: H01M 50/526, H01M 10/613, H01M 50/507, H01M 10/627, H01M 10/647, H01M 50/503, H01M 50/209, H01M 10/6561, H01M 10/6551, H01M 10/6556

(54) **BATTERY PACK AND BATTERY CELL INTERCONNECTION COMPONENT THEREOF**

(30) Priority: 23.08.2023 US 202363534181 P
(71) Applicant: Delta Electronics, Inc., Taoyuan City 333 (TW)
(72) Inventor: CHEN, Chin-Ming, 333 Taoyuan City (TW); WU, Chih-Yu, 333 Taoyuan City (TW); PENG, Yen-Kai, 333 Taoyuan City (TW)
(74) Representative: Riccardi, Elisa

(57) **Abstract**

A battery cell interconnection component includes a multi-layer structure and two holders. The multi-layer structure includes a plurality of metal strips in a stack arrangement. A gap is formed between any two immediately adjacent metal strips. The two holders fixedly clamp two ends of the multi-layer structure, and each of the two holders is configured to be electrically connected to an electrode of a battery cell.

## Description

### BACKGROUND

### Technical Field

The present disclosure relates to a battery pack and a battery cell interconnection component thereof.

### Description of Related Art

Conventionally, battery cells in a battery pack are connected by flat metal plates. When the battery pack is in operation, in addition to the battery cells generating heat, the flat metal plates also generate heat as a result of electric current passing through the flat metal plates. The heated flat metal plates could drive the temperatures of the battery cells further up, which may cause safety concerns.

### SUMMARY

In view of the foregoing, one of the objects of the present disclosure is to provide an improved battery pack and an improved battery cell interconnection component to resolve the technical problems mentioned above.

To achieve the objective stated above, in accordance with an embodiment of the present disclosure, a battery cell interconnection component includes a multi-layer structure and two holders. The multi-layer structure includes a plurality of first metal strips in a stack arrangement. A gap is formed between any two adjacent first metal strips. The two holders fixedly clamp two ends of the multi-layer structure, respectively. Each of the two holders is configured to be electrically connected to an electrode of a battery cell.

In one or more embodiments of the present disclosure, the two holders include a second metal strip bent to form a concavity. An end of each of the first metal strips is inserted into the concavity.

In one or more embodiments of the present disclosure, the second metal strip has a greater thickness than that of each of the first metal strips.

In one or more embodiments of the present disclosure, each of the first metal strips includes a first material. The second metal strip includes a second material. The second material has a greater hardness than that of the first material.

In one or more embodiments of the present disclosure, each of the first metal strips includes a first planar section, a second planar section and a middle section. The first planar section and the second planar section are spaced apart from each other. The middle section is located between the first planar section and the second planar section, and the middle section is at a height different from the first planar section and the second planar section. The two holders clamp the first planar section and the second planar section, respectively.

In one or more embodiments of the present disclosure, each of the first metal strips further includes a first inclined section and a second inclined section. The first inclined section is connected between the first planar section and the middle section. The second inclined section is connected between the second planar section and the middle section. The first metal strips are bent one by one at the first inclined section and the second inclined section, such that the gap is formed between the middle sections of any two adjacent first metal strips.

In one or more embodiments of the present disclosure, the first metal strips include a third metal strip and a fourth metal strip adjacent to the third metal strip. The third metal strip includes a middle section. The fourth metal strip has a notch and a flange extending from an edge of the notch. The flange is bent towards the third metal strip and abuts against the middle section of the third metal strip.

In one or more embodiments of the present disclosure, the first metal strips include a third metal strip and a fourth metal strip adjacent to the third metal strip. The third metal strip includes a planar region. The fourth metal strip includes a bent portion. The bent portion projects towards the third metal strip and abuts against the planar region of the third metal strip.

In one or more embodiments of the present disclosure, the first metal strips include a third metal strip and a fourth metal strip adjacent to the third metal strip. The third metal strip is underneath the fourth metal strip. Two ends of the third metal strip are stacked with two ends of the fourth metal strip, and the fourth metal strip has a greater length than that of the third metal strip.

In accordance with an embodiment of the present disclosure, a battery pack includes a housing, a plurality of battery cells and a plurality of battery cell interconnection components. The battery cells are disposed in the housing and each include a positive electrode and a negative electrode. The battery cells are arranged in at least one row along a direction. In said direction, the positive electrodes of the battery cells in the same row are aligned with one another, and the negative electrodes of the battery cells in the same row are aligned with one another. Each of the battery cell interconnection components includes a multi-layer structure and two holders. The multi-layer structure includes a plurality of first metal strips in a stack arrangement. A gap is formed between any two adjacent first metal strips. The two holders fixedly clamp two ends of the multi-layer structure, respectively. One of the two holders is attached to the positive electrode of a first battery cell of the battery cells, and the other of the two holders is attached to the negative electrode of a second battery cell of the battery cells. The second battery cell is adjacent to the first battery cell.

In one or more embodiments of the present disclosure, the housing has a first side opening and a second side opening. The first side opening and the second side opening are provided on opposite sides of the housing and face the battery cell interconnection components.

In sum, the present disclosure provides a battery cell interconnection component for interconnecting multiple battery cells in a battery pack. The battery cell interconnection component includes a multi-layer structure. The multi-layer structure includes a plurality of metal strips in a stack arrangement, and a gap is formed between any two adjacent metal strips. With the multi-layer structure, overheating of the battery cell interconnection component itself can be prevented. In addition, the battery cell interconnection component can also act as a heatsink for the battery cells coupled thereto, so as to facilitate cooling of the battery cells.

### BRIEF DESCRIPTION OF THE DRAWINGS

To make the objectives, features, advantages, and embodiments of the present disclosure, including those mentioned above and others, more comprehensible, descriptions of the accompanying drawings are provided as follows.
Fig. 1 illustrates a schematic view of an energy storage cabinet in accordance with an embodiment of the present disclosure;
Fig. 2 illustrates a schematic view of one of the battery packs of the energy storage cabinet shown in Fig. 1;
Fig. 3 illustrates a top view of the battery pack shown in Fig. 2, with the battery cell interconnection components being removed;
Fig. 4 illustrates an enlarged view of one of the battery cell interconnection components of the battery pack shown in Fig. 2;
Fig. 5 illustrates a partially enlarged side view of the battery cell interconnection component shown in Fig. 4;
Fig. 6 illustrates an enlarged view of two of the battery cells and one of the battery cell interconnection components of the battery pack shown in Fig. 2;
Fig. 7 illustrates a schematic view of a battery cell interconnection component in accordance with another embodiment of the present disclosure;
Fig. 8 illustrates a schematic view of a battery cell interconnection component in accordance with another embodiment of the present disclosure; and
Fig. 9 illustrates a schematic side view of a battery cell interconnection component in accordance with another embodiment of the present disclosure.

### DETAILED DESCRIPTION

For the completeness of the description of the present disclosure, reference is made to the accompanying drawings and the various embodiments described below. Various features in the drawings are not drawn to scale and are provided for illustration purposes only. To provide full understanding of the present disclosure, various practical details will be explained in the following descriptions. However, a person with an ordinary skill in relevant art should realize that the present disclosure can be implemented without one or more of the practical details. Therefore, the present disclosure is not to be limited by these details.

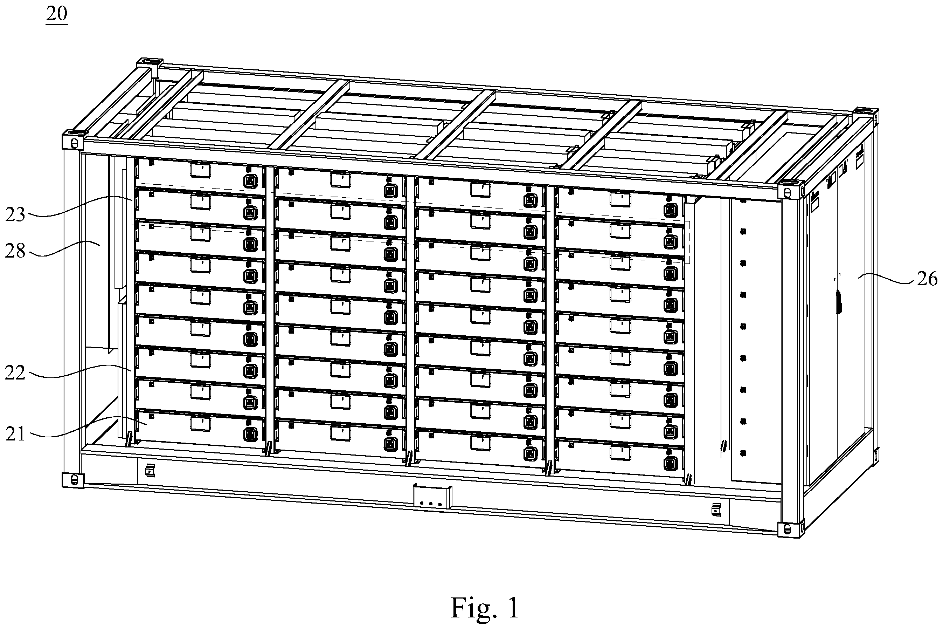

Reference is made to Fig. 1. Fig. 1 illustrates a schematic view of an energy storage cabinet 20 in accordance with an embodiment of the present disclosure. The energy storage cabinet 20 includes a frame 22 and one or more battery packs 21 disposed on the frame 22. The frame 22 is configured to support the battery packs 21. The frame 22 has one or more slots, and each of the slots is configured to accommodate one of the battery packs 21. The battery packs 21 are detachably disposed in the slots of the frame 22. In other words, the battery packs 21 can be inserted in the slots, and can be pulled out of the slots as needed (e.g., for the purpose of repair or maintenance). The battery packs 21 may be engaged with rail structures of the frame 22 (not depicted), such that the battery packs 21 can be slid into or out of the slots.

As shown in Fig. 1, the battery packs 21 are stacked along the vertical direction. The battery packs 21 can be divided into multiple floor assemblies 23. Battery packs 21 with the same elevation belong to the same floor assembly 23. In the illustrated embodiment, the energy storage cabinet 20 includes nine floor assemblies 23, and one of which is identified by a dashed box. The battery packs 21 in the same floor assembly 23 are electrically connected in series, such that the voltages of the battery packs 21 in the same floor assembly 23 are summed up to produce a greater voltage. Each of the floor assemblies 23 has a common anode and a common cathode.

As shown in Fig. 1, the energy storage cabinet 20 further includes a junction device 26. The junction device 26 is disposed on the frame 22 and is positioned on one side of the energy storage cabinet 20. The junction device 26 is connected to the common anode and the common cathode (not depicted) of each of the floor assemblies 23. The junction device 26 may include a DC junction unit, an AC auxiliary unit, and one or more control units (or one or more switch units).

As shown in Fig. 1, the energy storage cabinet 20 further includes a cooling device 28. The cooling device 28 is disposed on the frame 22 and is positioned on another side of the energy storage cabinet 20. The cooling device 28 is configured to output a cool air to facilitate cooling of the battery packs 21. The cooling device 28 is, for example, an air conditioner. In some embodiments, the junction device 26 and the cooling device 28 are disposed on two opposite sides of the battery packs 21.

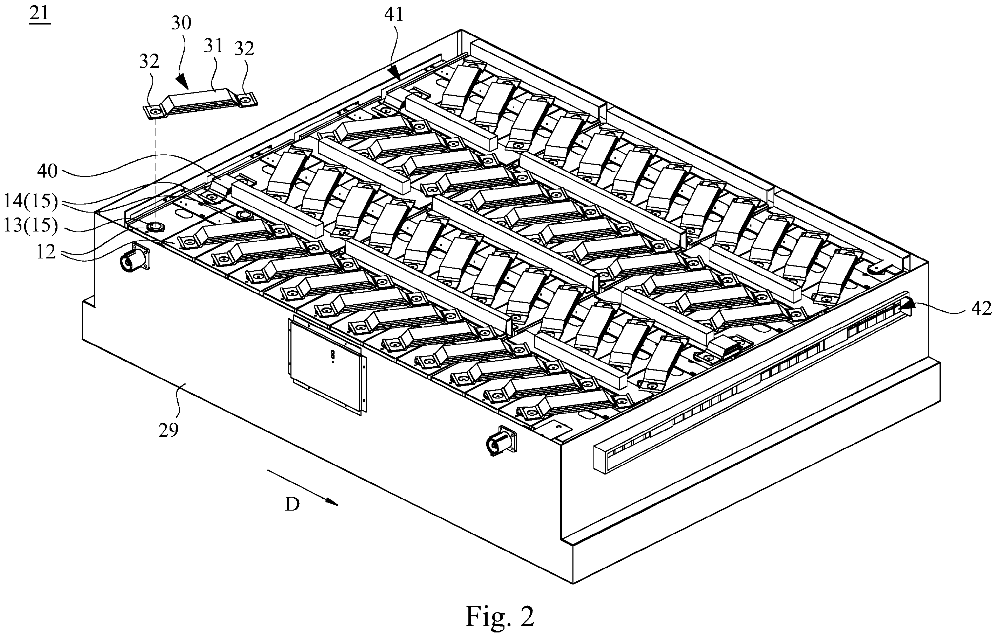

Reference is made to Fig. 2. Fig. 2 illustrates a schematic view of one of the battery packs 21 of the energy storage cabinet 20 shown in Fig. 1. In Fig. 2, a lid of the battery pack 21 is removed to reveal the interior of the battery pack 21. The battery pack 21 includes a housing 29 and a plurality of battery cells 12 disposed in the housing 29. The battery cells 12 are, for example, lithium ion secondary batteries. The battery cells 12 may include prismatic cells shown in Fig. 2. The battery cells 12 are arranged in at least one row along a direction D. In the illustrated embodiment, the battery pack 21 includes forty-eight battery cells 12 arranged in four rows. Each of the rows has twelve battery cells 12.

As shown in Fig. 2, each of the battery cells 12 includes two electrodes 15 arranged side by side, one of which is a positive electrode 13 and the other is a negative electrode 14. The battery pack 21 further includes a plurality of first battery cell interconnection components 30, which may also be referred to as "bus bars". The first battery cell interconnection components 30 are disposed in the housing 29 and are configured to connect the battery cells 12 in series. Specifically, each of the first battery cell interconnection components 30 is electrically connected to the positive electrode 13 and the negative electrode 14 of two immediately adjacent battery cells 12 in the same row. In some embodiments, the battery pack 21 further includes at least one second battery cell interconnection component 40. The second battery cell interconnection component 40 is disposed in the housing 29 and is electrically connected to the electrodes 15 of two battery cells 12 on adjacent rows.

In the illustrated embodiment, the electrodes 15 are provided on an upper surface of the battery cell 12. The first battery cell interconnection components 30 and the second battery cell interconnection component 40 are disposed over the battery cells 12 and are in contact with the electrodes 15 of the battery cells 12. The first battery cell interconnection components 30 and the second battery cell interconnection component 40 may include electrically conductive materials, such as copper or copper alloy. The first battery cell interconnection components 30 and the second battery cell interconnection component 40 can be affixed to the electrodes 15 of the battery cells 12 by means of laser welding, screwing, or other suitable techniques. In some embodiments, the second battery cell interconnection component 40 is shorter in length than the first battery cell interconnection components 30.

As shown in Fig. 2, each of the first battery cell interconnection components 30 includes a multi-layer structure 31 and two holders 32. The multi-layer structure 31 has one or more gaps. The two holders 32 fixedly clamp two ends of the multi-layer structure 31. The two holders 32 are electrically connected to the electrodes 15 of two different battery cells 12. Specifically, one of the two holders 32 is attached to the positive electrode 13 of one of the battery cells 12, and the other one of the two holders 32 is attached to the negative electrode 14 of another one of the battery cells 12. The multi-layer structure 31 carries electric current flowing through the battery cells 12 and additionally provides a heat removal function. Specifically, the multi-layer structure 31 has an enlarged surface area due to its multi-layer design, allowing heat to dissipate quickly. With the multi-layer structure 31, overheating of the first battery cell interconnection component 30 itself can be prevented. In addition, the first battery cell interconnection component 30 can also act as a heat sink for the battery cells 12 coupled thereto, so as to facilitate cooling of the battery cells 12. In some embodiments, the second battery cell interconnection component 40 may also include a multi-layer structure and two holders, the structures of which are similar to the multi-layer structure 31 and the two holders 32 of the first battery cell interconnection component 30.

As shown in Fig. 2, the housing 29 of the battery pack 21 has at least one first side opening 41 and at least one second side opening 42. The first side opening 41 and the second side opening 42 are provided on opposite sides of the housing 29 and are positioned to face the first battery cell interconnection components 30. In some embodiments, the housing 29 includes two opposite sidewalls. The first side opening 41 and the second side opening 42 may be formed on the two opposite sidewalls, respectively. An upper edge of the first side opening 41 and an upper edge of the second side opening 42 are above the upper surfaces of the battery cells 12 (the upper surfaces of the battery cells 12 are where the electrodes 15 reside). The first side opening 41 and the second side opening 42 is configured to allow airflow (e.g., the cool air produced by the cooling device 28 shown in Fig. 1) to pass through. The first side opening 41, the second side opening 42 and the first battery cell interconnection component 30 can be provided at approximately the same height. For example, airflow can enter the housing 29 through the first side opening 41, and then pass through the space above the battery cells 12 and the first battery cell interconnection components 30, and then leaves the housing 29 through the second side opening 42. Owing to the convention heat transfer mechanism, heat dissipation can be sped up.

In some embodiments, the energy storage cabinet 20 has a fire protection function to cope with the situation where some or all of the battery cells 12 fail and the temperature goes out of control or even causes fire. When the energy storage cabinet 20 detects overheating of at least one battery pack 21, the energy storage cabinet 20 is configured to fill a cooling liquid (e.g., pure water) into the housing 29 of the at least one overheating battery pack 21. In said situation, at least one of the first side opening 41 and the second side opening 42 can act as a discharge port for the battery pack 21 to discharge excessive cooling liquid. As shown in Fig. 2, in some embodiments, a lower edge of at least one of the first side opening 41 and the second side opening 42 is at a position below the electrodes 15 of the battery cells 12. By this arrangement, when the cooling liquid is filled into the housing 29, the highest level of the cooling liquid would be below the electrodes 15 of the battery cells 12, and thus the cooling liquid is prevented from contacting the electrodes 15 of the battery cells 12.

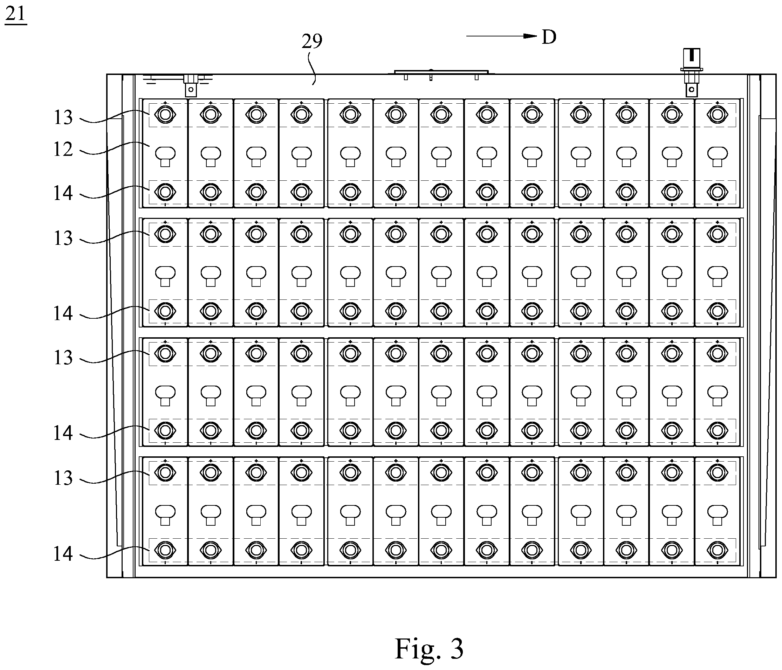

Reference is made to Fig. 3. Fig. 3 illustrates a top view of the battery pack 21 shown in Fig. 2, with the battery cell interconnection components being removed. As shown in Figs. 2 and 3, in the direction D along which the battery cells 12 are arranged, the positive electrodes 13 of the battery cells 12 in the same row are aligned with one another, and the negative electrodes 14 of the battery cells 12 in the same row are aligned with one another. In other words, all of the battery cells 12 in the same row have their positive electrodes 13 arranged on the same side and their negative electrodes 14 arranged on the other same side. As mentioned above, each of the first battery cell interconnection components 30 is attached to the positive electrode 13 of one of the battery cells 12 and the negative electrode 14 of another one of the battery cells 12. Consequently, each of the first battery cell interconnection components 30 is disposed at an angle to the direction D along which the battery cells 12 are arranged, and all the first battery cell interconnection components 30 in the same row tilt in the same direction. By this arrangement, installation of the first battery cell interconnection components 30 can be automated, and the installation of the first battery cell interconnection components 30 can be completely more quickly, resulting in an improvement in productivity. For example, a robotic arm can be deployed to place the first battery cell interconnection components 30 on the battery cells 12. Because the positive electrodes 13 and the negative electrodes 14 of the battery cells 12 are in an aligned configuration as described above, the first battery cell interconnection components 30 in the same row have the same orientation. Therefore, the robotic arm can continuously place the first battery cell interconnection components 30 in the same row without having to rotate to change orientation. Compared to conventional battery packs in which the electrodes of the battery cells are interleaved, the arrangement of the battery cells 12 shown in Fig. 3 can help reduce errors and improve productivity when the battery pack 21 is manufactured.

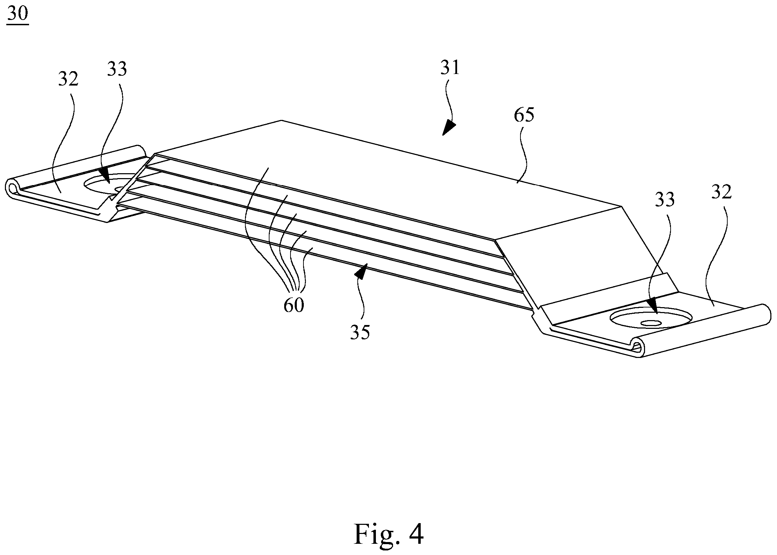

Reference is made to Fig. 4. Fig. 4 illustrates an enlarged view of one of the first battery cell interconnection components 30 of the battery pack 21 shown in Fig. 2. The multi-layer structure 31 of the first battery cell interconnection component 30 includes a plurality of first metal strips 60 in a stack arrangement. A gap 35 is formed between any two immediately adjacent first metal strips 60. The gap 35 can allow airflow to pass through. The two holders 32 fixedly clamp two ends of the multi-layer structure 31, respectively, to combine the first metal strips 60. In some embodiments, the two holders 32 include folded metal pieces.

As shown in Fig. 4, each of the first metal strips 60 includes a middle section 65 located between the two holders 32. The middle sections 65 of any two immediately adjacent first metal strips 60 are spaced apart from each other to form the gap 35. Each of the holders 32 has an opening 33, which is, for example, a circular hole. The opening 33 can facilitate affixing the holders 32 to the corresponding electrodes 15 of the battery cells 12 by means of welding or screwing for electrical connection.

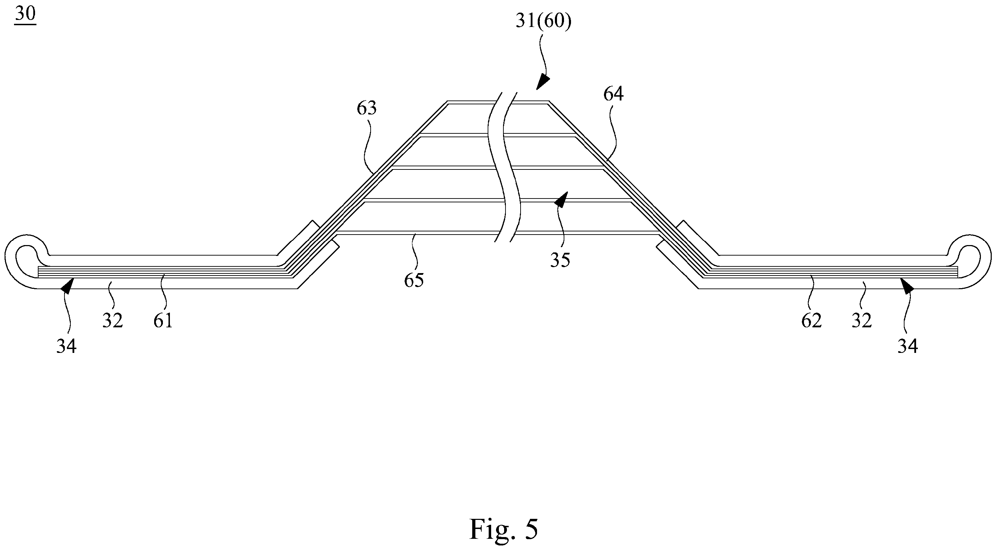

Reference is made to Fig. 5. Fig. 5 illustrates a partially enlarged side view of the first battery cell interconnection component 30 shown in Fig. 4. In some embodiments, one or both of the two holders 32 include a second metal strip bent to form a concavity 34. On or both ends of each of the first metal strips 60 are inserted into the concavity 34, and subsequently, ultrasonic welding or other suitable techniques can be applied to fixedly combine the first metal strips 60 and the holders 32. In some embodiments, the second metal strip has a greater thickness than that of each of the first metal strips 60. In some embodiments, each of the first metal strips 60 includes a first material, the second metal strip includes a second material, and the second material has a greater hardness than that of the first material. In some embodiments, the first metal strips 60 and the second metal strip include copper alloys of different hardness.

As shown in Fig. 5, each of the first metal strips 60 further includes a first planar section 61 and a second planar section 62. The first planar section 61 and the second planar section 62 are spaced apart from each other. The middle section 65 is located between the first planar section 61 and the second planar section 62, and the middle section 65 is at a height different from the first planar section 61 and the second planar section 62. The two holders 32 clamp the first planar sections 61 and the second planar sections 62 of the first metal strips 60, respectively. The ends of the first metal strips 60 are stacked at the first planar section 61, and then the stacked first planar sections 61 are received by the concavity 34 of one of the two holders 32. The other ends of the first metal strips 60 are stacked at the second planar section 62, and then the stacked second planar sections 62 are received by the concavity 34 of the other one of the two holders 32. The middle section 65 is substantially parallel to the first planar section 61 and the second planar section 62.

As shown in Fig. 5, each of the first metal strips 60 further includes a first inclined section 63 and a second inclined section 64. The first inclined section 63 is connected between the first planar section 61 and the middle section 65. The second inclined section 64 is connected between the second planar section 62 and the middle section 65. The first metal strips 60 are bent one by one at the first inclined section 63 and the second inclined section 64, such that one or more gaps 35 are formed between the middle sections 65 of the first metal strips 60.

In some embodiments, a method of manufacturing the first battery cell interconnection component 30 includes: (i) bending a plurality of flat metal strips to form a plurality of first metal strips 60 each having two inclined sections; (ii) stacking the first metal strips 60, and then using the two holders 32 to clamp the first planar sections 61 and the second planar sections 62 at two ends of the first metal strips 60; and (iii) applying ultrasonic welding to the two holders 32, the first planar sections 61 and the second planar sections 62. After the welding process is completed, the middle section 65 of each of the first metal strips 60 of the first battery cell interconnection component 30 are separated from each other, and one or more gaps 35 are formed therebetween.

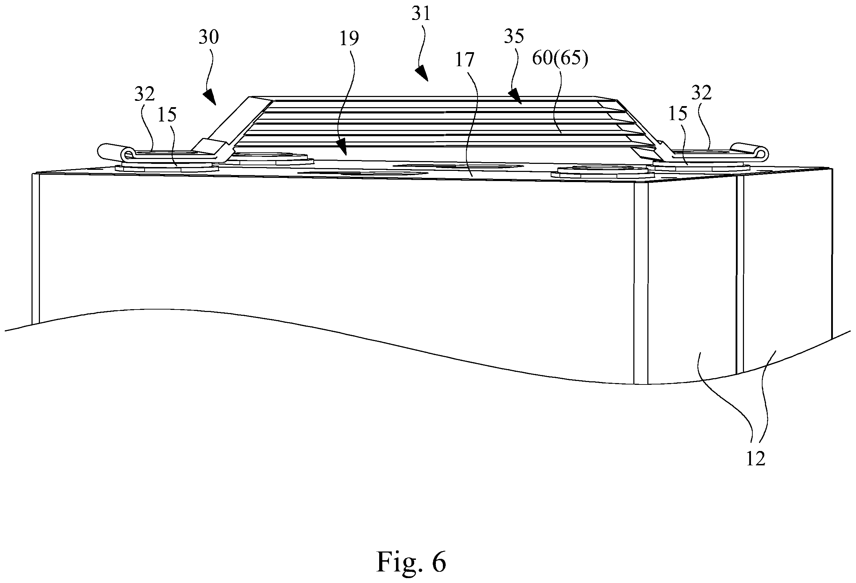

Reference is made to Fig. 6. Fig. 6 illustrates an enlarged view of two of the battery cells 12 and one of the first battery cell interconnection components 30 of the battery pack 21 shown in Fig. 2. In some embodiments, the middle section 65 of the lowermost first metal strip 60 (i.e., the first metal strip 60 closest to the battery cells 12) is at a position above the electrodes 15 of the battery cells 12 and the upper surfaces of the battery cells 12. By this arrangement, an airflow passage 19 is formed between the lowermost first metal strip 60 and the upper surfaces of the battery cells 12 to facilitate cooling of the battery cells 12.

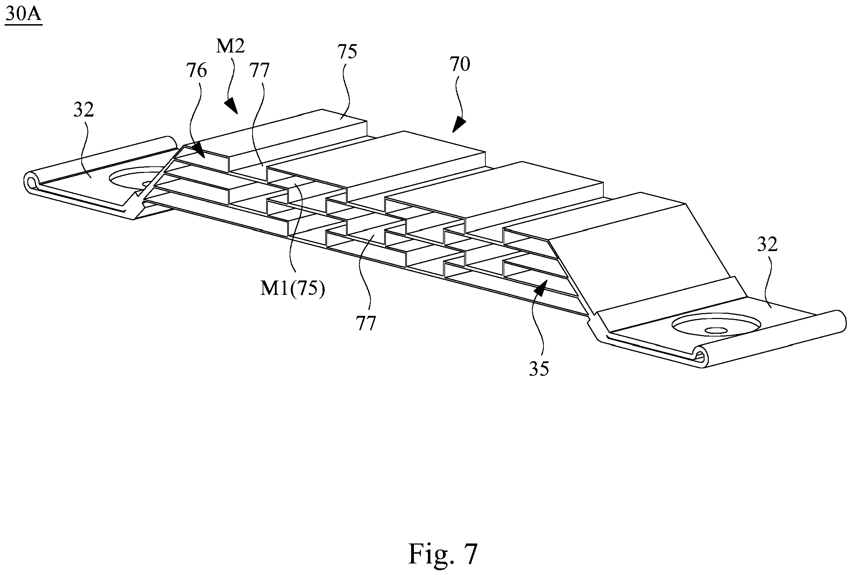

Reference is made to Fig. 7. Fig. 7 illustrates a schematic view of a first battery cell interconnection component 30A in accordance with another embodiment of the present disclosure. The first battery cell interconnection component 30A of the present embodiment includes a plurality of first metal strips 70. The first metal strips 70 differ from the first metal strips 60 described above in that at least one of the first metal strips 70 includes at least one bent portion 77. The bent portion 77 can provide support for the first metal strips 70. In some embodiments, the first metal strips 70 include two immediately adjacent metal strips M1 and M2. The middle section 75 of the metal strip M1 includes a planar region 76. The middle section 75 of the metal strip M2 includes the bent portion 77. The bent portion 77 projects towards the metal strip M1 and abuts against the planar region 76 of the metal strip M1. In some embodiments, the metal strip M1 is underneath the metal strip M2. The bent portion 77 of the metal strip M2 projects downward and abuts against the metal strip M1. In some embodiments, the lowermost first metal strip 70 does not include the bent portion 77.

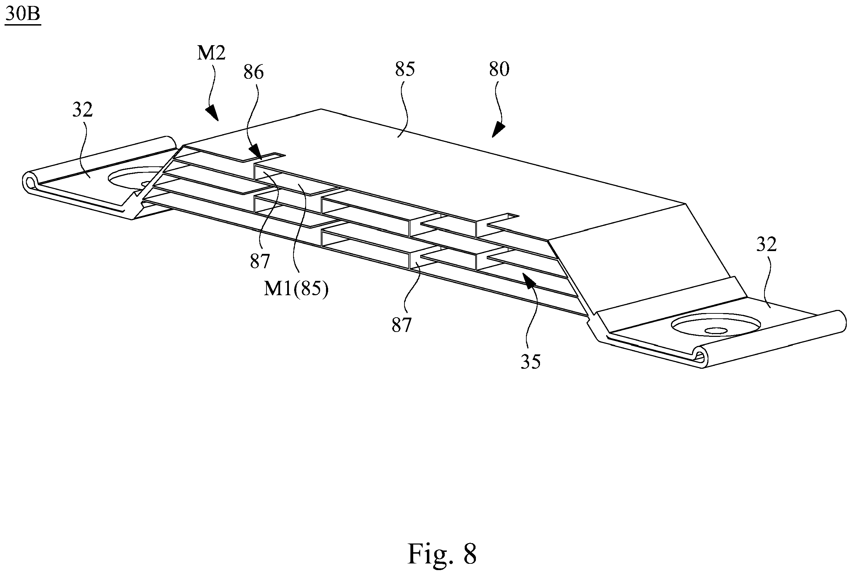

Reference is made to Fig. 8. Fig. 8 illustrates a schematic view of a first battery cell interconnection component 30B in accordance with another embodiment of the present disclosure. The first battery cell interconnection component 30B of the present embodiment includes a plurality of first metal strips 80. The first metal strips 80 differ from the first metal strips 60 described above in that at least one of the first metal strips 80 includes at least one flange 87. The flange 87 can provide support for the first metal strips 80. In some embodiments, the first metal strips 70 include two immediately adjacent metal strips M1 and M2. The middle section 85 of the metal strip M2 has a notch 86 and the flange 87 extending from an edge of the notch 86. The flange 87 is bent towards the metal strip M1 and abuts against the middle section 85 of the metal strip M1. In some embodiments, the metal strip M1 is underneath the metal strip M2. The flange 87 of the metal strip M2 is bent downward and abuts against the metal strip M1. In some embodiments, the lowermost first metal strip 80 does not include the flange 87.

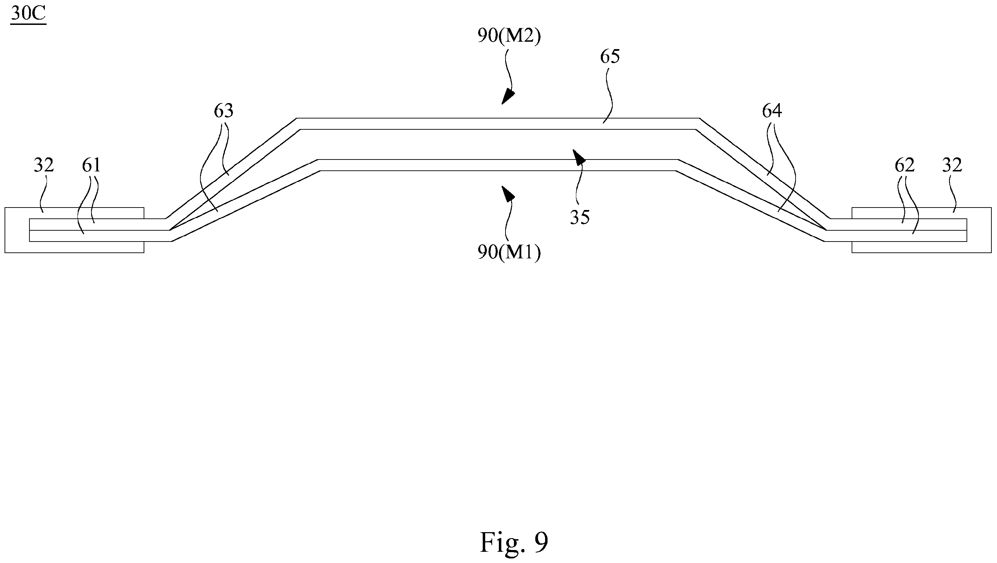

Reference is made to Fig. 9. Fig. 9 illustrates a schematic side view of a first battery cell interconnection component 30C in accordance with another embodiment of the present disclosure. The first battery cell interconnection component 30C of the present embodiment includes a plurality of first metal strips 90. The first metal strips 90 differ from the first metal strips 60 described above in that at least two of the first metal strips 90 have unequal lengths. When the two ends of the first metal strips 90 having unequal lengths are aligned, the middle section 65 of the longer first metal strip 90 rises and causes one or more gaps 35 to be formed between the first metal strips 90. In some embodiments, the first metal strips 70 include two immediately adjacent metal strips M1 and M2. The metal strip M1 is underneath the metal strip M2. Two ends of the metal strip M1 are stacked with two ends of the metal strip M2 (e.g., the first planar section 61 and the second planar section 62 of the metal strip M1 are stacked with the first planar section 61 and the second planar section 62 of the metal strip M2, respectively), and the metal strip M2 has a greater length than that of the metal strip M1.

As shown in Fig. 9, in some embodiments, an outer edge of the first planar section 61 of the metal strip M1 can be aligned with an outer edge of the first planar section 61 of the metal strip M2, and an outer edge of the second planar section 62 of the metal strip M1 can be aligned with an outer edge of the second planar section 62 of the metal strip M2. The first inclined sections 63 of the metal strips M1 and M2 may be spaced apart from each other as shown in Fig. 9, or may alternatively be in contact with each other. Likewise, the second inclined sections 64 of the metal strips M1 and M2 may be spaced apart from each other as shown in Fig. 9, or may alternatively be in contact with each other. In some embodiments, all of the first metal strips 90 of the first battery cell interconnection component 30C have distinct lengths.

In sum, the present disclosure provides a battery cell interconnection component for interconnecting multiple battery cells in a battery pack. The battery cell interconnection component includes a multi-layer structure. The multi-layer structure includes a plurality of metal strips in a stack arrangement, and a gap is formed between any two adjacent metal strips. With the multi-layer structure, overheating of the battery cell interconnection component itself can be prevented. In addition, the battery cell interconnection component can also act as a heatsink for the battery cells coupled thereto, so as to facilitate cooling of the battery cells.

## Claims

1. A battery cell interconnection component (30, 30A, 30B, 30C), **characterized by** comprising:
a multi-layer structure (31) comprising a plurality of first metal strips (60) in a stack arrangement, wherein a gap (35) is formed between any two adjacent ones of the first metal strips (60); and
two holders (32) fixedly clamping two ends of the multi-layer structure (31), respectively, each of the two holders (32) being configured to be electrically connected to an electrode (15) of a battery cell (12).

2. The battery cell interconnection component of claim 1, **characterized in that** the two holders (32) comprise a second metal strip, the second metal strip is bent to form a concavity (34), and an end of each of the first metal strips (60) is inserted into the concavity (34).

3. The battery cell interconnection component of claim 2, **characterized in that** the second metal strip has a greater thickness than that of each of the first metal strips (60).

4. The battery cell interconnection component of claim 2 or 3, **characterized in that** each of the first metal strips (60) comprises a first material, the second metal strip comprises a second material, and the second material has a greater hardness than that of the first material.

5. The battery cell interconnection component of any preceding claim, **characterized in that** each of the first metal strips (60) comprises a first planar section (61), a second planar section (62) and a middle section (65), the first planar section (61) and the second planar section (62) are spaced apart from each other, the middle section (65) is located between the first planar section (61) and the second planar section (62), and the middle section (65) is at a height different from the first planar section (61) and the second planar section (62), wherein the two holders (32) clamp the first planar section (61) and the second planar section (62), respectively.

6. The battery cell interconnection component of claim 5, **characterized in that** each of the first metal strips (60) further comprises a first inclined section (63) and a second inclined section (64), the first inclined section (63) is connected between the first planar section (61) and the middle section (65), the second inclined section (64) is connected between the second planar section (62) and the middle section (65), wherein the first metal strips (60) are bent one by one at the first inclined section (63) and the second inclined section (64), such that the gap (35) is formed between the middle sections (65) of any two adjacent ones of the first metal strips (60).

7. The battery cell interconnection component of any preceding claim, **characterized in that** the first metal strips (60) comprise a third metal strip and a fourth metal strip adjacent to the third metal strip, the third metal strip comprises a middle section (65), the fourth metal strip has a notch (86) and a flange (87) extending from an edge of the notch (86), the flange (87) is bent towards the third metal strip and abuts against the middle section (65) of the third metal strip.

8. The battery cell interconnection component of any of claims 1-6, **characterized in that** the first metal strips (60) comprise a third metal strip and a fourth metal strip adjacent to the third metal strip, the third metal strip comprises a planar region (76), the fourth metal strip comprises a bent portion (77), the bent portion (77) projects towards the third metal strip and abuts against the planar region (76) of the third metal strip.

9. The battery cell interconnection component of any of claims 1-6, **characterized in that** the first metal strips (60) comprise a third metal strip and a fourth metal strip adjacent to the third metal strip, the third metal strip is underneath the fourth metal strip, wherein two ends of the third metal strip are stacked with two ends of the fourth metal strip, and the fourth metal strip has a greater length than that of the third metal strip.

10. A battery pack (21), **characterized by** comprising:
a housing (29);
a plurality of battery cells (12) disposed in the housing (29) and each comprising a positive electrode (13) and a negative electrode (14), wherein the battery cells (12) are arranged in at least one row along a direction (D), in said direction (D), the positive electrodes (13) of the battery cells (12) in the same row are aligned with one another, and the negative electrodes (14) of the battery cells (12) in the same row are aligned with one another; and
a plurality of the battery cell interconnection component (30, 30A, 30B, 30C) of any preceding claim, wherein one of the two holders is attached to the positive electrode of a first battery cell of the battery cells, and the other of the two holders is attached to the negative electrode of a second battery cell of the battery cells, the second battery cell is adjacent to the first battery cell.

11. The battery pack of claim 10, **characterized in that** the housing (29) has a first side opening (41) and a second side opening (42), the first side opening (41) and the second side opening (42) are provided on opposite sides of the housing (29) and face the battery cell interconnection components (30, 30A, 30B, 30C).
